# FASCICULE DE BREVET EUROPEEN

(11) **EP 2 452 102 B1**
(45) Date de publication et mention de la délivrance du brevet: **15.05.2013**
(21) Numéro de dépôt: 10742194.3
(22) Date de dépôt: 05.07.2010
(51) Int. Cl.: F16H 61/688, F16H 61/02

(54) **PROCEDE ET DISPOSITIF POUR PILOTER UNE BOÎTE DE VITESSES**
VORRICHTUNG UND VERFAHREN ZUR STEUERUNG EINES GETRIEBES
METHOD AND DEVICE FOR CONTROLLING A GEARBOX

(30) Priorité: 09.07.2009 FR 0954746
(43) Date de publication de la demande: 16.05.2012
(73) Titulaire: Peugeot Citroën Automobiles SA, 78140 Vélizy Villacoublay (FR)
(72) Inventeur: SCHAEFFER, Eric, F-75013 Paris (FR)
(74) Mandataire: Rosenberg, Muriel Sylvie
(86) Numéro de dépôt international: PCT/FR2010/051409
(87) Numéro de publication internationale: WO 2011/004108

(56) Documents cités:
- WO-A2-03/074904
- DE-A1- 10 036 820
- DE-A1-102006 009 589

## Description

L'invention concerne un procédé et un dispositif pour piloter une boîte de vitesses à double embrayage de véhicule, notamment de véhicule automobile, tels que connus de DE 100 36 820.

Les boîtes de vitesse pilotées à double embrayage sont plus avantageuses que les boîtes de vitesse automatiques à train épicycloïdal, notamment en termes d'économie de carburant.

On connaît déjà des procédés et dispositifs de ce type tels que, par exemple, ceux décrits dans le document FR0109521. Dans ce document de l'état de la technique, le choix d'un rapport de vitesse est le choix du rapport suivant ou précédant un rapport déjà engagé. Le choix peut être réalisé au moyen d'un appareil de commande pour la boîte de vitesse en évaluant les paramètres de mesure et les courbes caractéristiques d'autres composants du véhicule.

Pendant qu'un arbre primaire est embrayé avec le moteur, il est courant de présélectionner une position neutre sur l'arbre primaire non embrayé tant que le choix du rapport suivant ou précédent ne s'impose pas.

Cependant, la position neutre n'est pas nécessairement la plus économique en termes de consommation d'énergie.

De façon à améliorer l'état antérieur de la technique, l'invention a pour objet un procédé pour piloter une boîte de vitesses à double embrayage comportant une demi boîte embrayée sur un rapport dit courant et une demi boîte non embrayée, comprenant une étape d'embrayage de la demi boîte débrayée sur un rapport cible et de débrayage de la demi boîte embrayée lorsqu'un signalement du rapport cible valide une transition de volonté conducteur. Le procédé est remarquable en ce qu'il comprend une première étape de présélection sur la demi boîte non embrayée, d'un rapport optimal qui présente un rendement maximal pour la boîte de vitesse tant que ladite transition de volonté conducteur n'est pas validée.

De préférence, le procédé comprend une étape préalable de détermination du rapport optimal en fonction dudit rapport courant engagé sur la demi boîte embrayée.

Particulièrement, la détermination du rapport optimal en fonction du rapport courant engagé sur la demi boîte embrayée, est basée sur des mesures effectuées préalablement sur banc d'essai.

Plus particulièrement, le procédé comprend une deuxième étape de présélection sur la demi boîte non embrayée, dudit rapport cible dès que ladite transition de volonté conducteur est pas validée.

L'invention a aussi pour objet un dispositif pour piloter une boîte de vitesses à double embrayage, agencé pour exécuter le procédé selon l'invention.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est un schéma de boîte de vitesse à double embrayage ;
- la figure 2 montre des étapes de procédé conforme à l'invention ;
- la figure 3 est un diagramme temporel d'un comportement de boîte de vitesse qui résulte de l'invention.

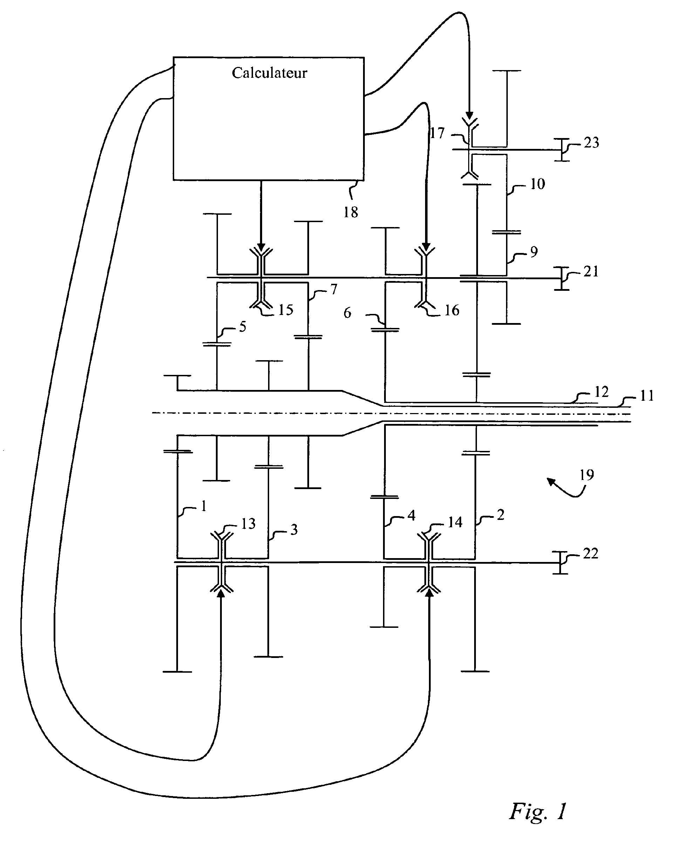

La boîte de vitesse 19 représentée sur la figure 1 comprend un arbre primaire 11 attribué à des rapports de vitesse d'ordre impair et un arbre primaire 12 attribué à des rapports de vitesse d'ordre pair. Chacun des arbres primaires est relié au moteur par un embrayage distinct non représenté.

Un rapport de première vitesse est obtenu au moyen d'un pignon fou 1 constamment engrené sur un pignon solidaire de l'arbre primaire 11 et monté libre en rotation sur un arbre secondaire 22. Un rapport de seconde vitesse est obtenu au moyen d'un pignon fou 2 constamment engrené sur un pignon solidaire de l'arbre primaire 12 et monté libre en rotation sur l'arbre secondaire 22. Un rapport de troisième vitesse est obtenu au moyen d'un pignon fou 3 constamment engrené sur un pignon solidaire de l'arbre primaire 11 et monté libre en rotation sur l'arbre secondaire 22. Un rapport de quatrième vitesse est obtenu au moyen d'un pignon fou 4 constamment engrené sur un pignon solidaire de l'arbre primaire 12 et monté libre en rotation sur l'arbre secondaire 22.

Un crabot 13 solidaire en rotation de l'arbre secondaire 22, est commandé par un calculateur 18 pour engager le premier rapport lorsqu'il est déplacé vers la gauche de façon à solidariser le pignon fou 1 avec l'arbre secondaire 22 et pour engager le troisième rapport lorsqu'il est déplacé vers la droite de façon à solidariser le pignon fou 3 avec l'arbre secondaire 22. Un crabot 14 solidaire en rotation de l'arbre secondaire 22, est commandé par le calculateur 18 pour engager le quatrième rapport lorsqu'il est déplacé vers la gauche de façon à solidariser le pignon fou 4 avec l'arbre secondaire 22 et pour engager le deuxième rapport lorsqu'il est déplacé vers la droite de façon à solidariser le pignon fou 2 avec l'arbre secondaire 22.

Un rapport de cinquième vitesse est obtenu au moyen d'un pignon fou 5 constamment engrené sur un pignon solidaire de l'arbre primaire 11 et monté libre en rotation sur un arbre secondaire 21. Un rapport de sixième vitesse est obtenu au moyen d'un pignon fou 6 constamment engrené sur un pignon solidaire de l'arbre primaire 12 et monté libre en rotation sur l'arbre secondaire 21. Un rapport de septième vitesse est obtenu au moyen d'un pignon fou 7 constamment engrené sur un pignon solidaire de l'arbre primaire 11 et monté libre en rotation sur l'arbre secondaire 21.

Un crabot 15 solidaire en rotation de l'arbre secondaire 21, est commandé par le calculateur 18 pour engager le cinquième rapport lorsqu'il est déplacé vers la gauche de façon à solidariser le pignon fou 5 avec l'arbre secondaire 21 et pour engager le septième rapport lorsqu'il est déplacé vers la droite de façon à solidariser le pignon fou 7 avec l'arbre secondaire 21. Un crabot 16 solidaire en rotation de l'arbre secondaire 21, est commandé par le calculateur 18 pour engager le sixième rapport lorsqu'il est déplacé vers la gauche de façon à solidariser le pignon fou 6 avec l'arbre secondaire 21.

Un rapport de marche arrière est obtenu au moyen d'un pignon fou 9 constamment engrené sur un pignon solidaire de l'arbre primaire 12 et monté libre en rotation sur l'arbre secondaire 21. Le pignon 9 est d'autre part constamment engrené sur un pignon fou 10 monté libre en rotation sur un arbre secondaire 23.

Un crabot 17 solidaire en rotation de l'arbre secondaire 23, est commandé par le calculateur 18 pour engager le rapport de marche arrière lorsqu'il est déplacé vers la droite de façon à solidariser le pignon fou 10 avec l'arbre secondaire 23. L'engrainement constant du pignon fou 10 avec le pignon fou 9 induit un sens de rotation de l'arbre secondaire 23 inverse de celui du pignon fou 9 lorsque le pignon fou est solidarisé à l'arbre secondaire 23 par le crabot 17.

Les arbres secondaires 21, 22, 23 sont reliés à un arbre de transmission non représenté, de façon à transmettre un couple aux roues motrices du véhicule non représentées lorsqu'un rapport de vitesse est engagé et qu'un arbre primaire est embrayé sur le moteur non représenté du véhicule.

Les pignons fous 1, 3, 5, 7, les crabots 13, 15 et l'arbre primaire 11 avec ses pignons solidaires, constituent une demi-boîte de vitesse des rapports impairs. Les pignons fous 2, 4, 6, les crabots 14, 16 et l'arbre primaire 12 avec ses pignons solidaires, constituent une demi-boîte de vitesse des rapports pairs.

Les flèches issues du calculateur 18 et qui aboutissent à chacun des crabots 13, 14, 15, 16, représentent des actionneurs permettant l'engagement des rapports. Le calculateur et les actionneurs constituent un dispositif pour engager les rapports indépendamment les uns des autres.

Le dispositif ainsi constitué, comprend dans une mémoire du calculateur, des structures de données qui hébergent des valeurs éventuellement fonction de la température, du couple d'entrée et du régime moteur pour indiquer un couple de pertes associées à deux rapports engagés, l'un sur un arbre embrayé et l'autre sur un arbre débrayé, de façon à pouvoir évaluer le rendement de la boîte de vitesse pour chaque situation. La connaissance des cartographies de rendement de la boîte de vitesse dans toutes les situations de vie, est obtenue par des mesures préalables des couples de pertes en fonction du régime et du couple d'entrée pour chaque rapport relativement au rapport engagé sur la demi boîte non embrayée, mesures effectuées par exemple sur banc d'essai d'un prototype.

Le système d'actionnement des rapports est dimensionné de façon à répondre rapidement aux ordres de changements de rapports.

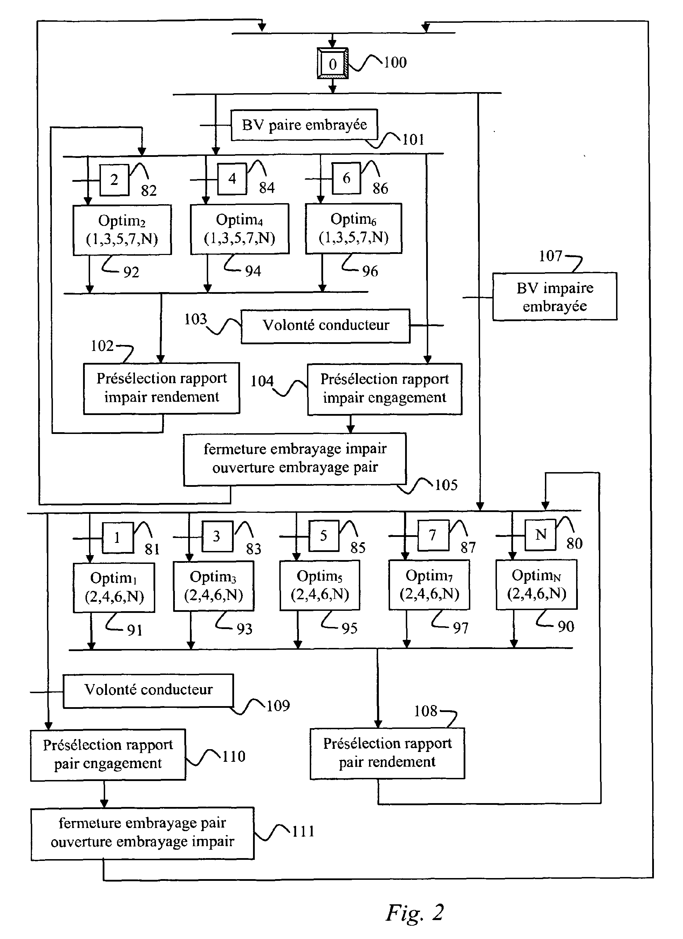

Le dispositif comprend d'autre part un ou plusieurs programmes hébergés dans la mémoire du calculateur pour exécuter les étapes de procédé expliquées à présent en référence à la figure 2.

Le principe général de pilotage des boîtes de vitesse à double embrayage, réside dans l'agencement des rapports pairs et impairs en deux demi boîtes de vitesse. Lorsqu'un rapport est engagé dans la demi boîte comprenant les rapports pairs, par exemple le deuxième rapport, le troisième rapport est déjà engagé dans l'autre demi boîte de vitesse si le véhicule est en accélération de sorte que le passage du deuxième au troisième rapport est effectué uniquement par croisement du couple entre les deux embrayages.

Pour piloter la boîte de vitesses 19 à double embrayage, le procédé part par exemple d'une étape d'initialisation et d'aiguillage à partir de laquelle sont commandés et contrôlés les rapports engagés ou non sur chacun des arbres primaires.

Une transition 101 est validée lorsque l'arbre 11 n'est pas embrayé. Typiquement en régime établi de fonctionnement, la transition 101 est validée lorsque c'est la demi boîte des rapports pairs qui transmet le couple du moteur à l'arbre de transmission avec un rapport pair engagé et l'arbre 12 embrayé.

Une transition 82, validée lorsque c'est le rapport 2 qui est engagé sur la demi boîte embrayée, active une étape 92 dans laquelle une fonction d'optimisation Optim₂ détermine celui des rapports 1, 3, 5, 7 et N pour le neutre (aucun rapport engagé) pour lequel le rendement de la boîte de vitesse est maximal.

De même, respectivement une transition 84, 86, validée lorsque c'est le rapport 4, 6 qui est engagé sur la demi boîte embrayée, active une étape 94, 96 dans laquelle une fonction d'optimisation Optim₄, Optim₆ détermine celui des rapports 1, 3, 5, 7 et N pour lequel le rendement de la boîte de vitesse est maximal.

Les fonctions d'optimisation sont basées sur des mesures préalables effectuées sur banc d'essais. Sur le banc d'essais, on engage par exemple le rapport 2 et on embraye la demi boîte de vitesses paire, on présélectionne le rapport 1 sur la demi boîte de vitesses impaire non embrayée et on parcourt l'ensemble de la plage de vitesses de rotation possibles de l'arbre primaire 12 et l'ensemble de la plage de couples applicables. Pour chaque vitesse et chaque couple possibles, le rendement de la boîte de vitesse est mémorisé. On procède ensuite de même pour chacun des rapports 4 et 6. Les valeurs obtenues sont conservées dans une table associative (cartographie) ou exploitées pour définir une fonction qui approxime au mieux le comportement des rapports présélectionnés.

Le rapport optimal qui a été déterminé dans l'une des étapes paires 92 à 96 est ensuite présélectionné dans une étape 102 qui reboucle en aval de la transition 101 pour le cas où les conditions de couple et de vitesse auraient changé de façon à passer sur un autre rapport optimal de le demi boîte non embrayée. En effet, tant que la boîte de vitesse reste embrayée sur la demi boîte paire, les rapports impairs peuvent librement changer.

Une transition 103, aussi en aval de la transition 101, est validée lorsque la volonté conducteur nécessite de passer du rapport courant sur la boîte paire embrayée à un rapport cible sur la boîte impaire qui est débrayée. Ce qui est ici nommé volonté conducteur est à prendre dans son acception la plus large et résulte généralement du comportement de conduite ou des conditions de roulage du véhicule. La gestion de la volonté conducteur ne fait pas spécialement partie de l'invention et relève d'un composant déjà existant. Lorsque le conducteur accélère, le composant existant décide de l'instant auquel passer le rapport supérieur sur la demi boîte impaire. Lorsque le conducteur décélère ou freine, le composant existant décide de l'instant auquel passer le rapport inférieur sur la demi boîte impaire pour maintenir le régime moteur en ralentissant. Lorsque le véhicule monte une côte, le composant existant décide de l'instant auquel passer le rapport inférieur sur la demi boîte impaire pour augmenter le régime moteur de façon à reprendre du couple. Le conducteur ne manifeste donc pas explicitement sa volonté en exécutant une manoeuvre particulière comme ce serait le cas sur une boîte de vitesse manuelle.

La transition 103 qui communique la valeur du rapport cible, supérieure ou inférieure, active une étape 104 dans laquelle le rapport cible impair est présélectionné de façon à être engagé.

Une étape 105 procède ensuite à la fermeture de l'embrayage impair et à l'ouverture de l'embrayage pair de façon à ce que la boîte de vitesse soit maintenant embrayée sur l'arbre 11.

Une transition 107 est validée lorsque l'arbre 12 n'est pas embrayé. Typiquement en régime établi de fonctionnement, la transition 107 est validée lorsque c'est la demi boîte des rapports impairs qui transmet le couple du moteur à l'arbre de transmission avec un rapport impair engagé et l'arbre 11 embrayé.

Une transition 81, validée lorsque c'est le rapport 1 qui est engagé sur la demi boîte embrayée, active une étape 91 dans laquelle une fonction d'optimisation Optim₁ détermine celui des rapports 2, 4, 6 et N pour lequel le rendement de la boîte de vitesse est maximal.

De même, respectivement une transition 83, 85, 87, 80 validée lorsque c'est le rapport 3, 5, 7 ou neutre qui est engagé sur la demi boîte embrayée, active une étape 93, 95, 97, 90 dans laquelle une fonction d'optimisation Optim₃, Optim₅, Optim₇, Optim_{N} détermine celui des rapports 2, 4, 6 et N pour lequel le rendement de la boîte de vitesse est maximal.

Les fonctions d'optimisation sont basées sur des mesures préalables effectuées sur banc d'essais. Sur le banc d'essais, on engage par exemple le rapport 1 et on embraye la demi boîte de vitesses impaire, on présélectionne le rapport 2 sur la demi boîte de vitesses paire non embrayée et on parcourt l'ensemble de la plage de vitesses de rotation possibles de l'arbre primaire 11 et l'ensemble de la plage de couples applicables. Pour chaque vitesse et chaque couple possibles, le rendement de la boîte de vitesse est mémorisé. On procède ensuite de même pour chacun des rapports 3, 5 et 7. Les valeurs obtenues sont conservées dans une table associative (cartographie) ou exploitées pour définir une fonction qui approxime au mieux le comportement des rapports présélectionnés.

Le rapport optimal qui a été déterminé dans l'une des étapes impaires 91 à 97 ou 90, est ensuite présélectionné dans une étape 108 qui reboucle en aval de la transition 107 pour le cas où les conditions de couple et de vitesse auraient changé de façon à passer sur un autre rapport optimal de la demi-boîte non embrayée. En effet, tant que la boîte de vitesse reste embrayée sur la demi-boîte impaire, les rapports pairs peuvent librement changer.

Une transition 109, aussi en aval de la transition 107, est validée lorsque la volonté conducteur nécessite de passer du rapport courant sur la boîte impaire embrayée à un rapport cible sur la boîte paire alors encore débrayée. Ce qui est ici nommé volonté conducteur est à prendre dans son acception la plus large et résulte généralement du comportement de conduite ou des conditions de roulage du véhicule. La gestion de la volonté conducteur ne fait pas spécialement partie de l'invention et relève d'un composant déjà existant. Lorsque le conducteur accélère, le composant existant décide de l'instant auquel passer le rapport supérieur sur la demi boîte paire. Lorsque le conducteur décélère ou freine, le composant existant décide de l'instant auquel passer le rapport inférieur sur la demi boîte paire pour maintenir le régime moteur en ralentissant. Lorsque le véhicule monte une côte, le composant existant décide de l'instant auquel passer le rapport inférieur sur la demi boîte impaire pour augmenter le régime moteur de façon à reprendre du couple, sauf à être déjà engagé sur le rapport minimal qui est le rapport 1. Le conducteur ne manifeste donc pas explicitement sa volonté en exécutant une manoeuvre particulière comme ce serait le cas sur une boîte de vitesse manuelle.

La transition 109 qui communique la valeur du rapport cible, supérieure ou inférieure, active une étape 110 dans laquelle le rapport cible pair est présélectionné de façon à être engagé.

Une étape 111 procède ensuite à la fermeture de l'embrayage pair et à l'ouverture de l'embrayage impair de façon à ce que la boîte de vitesse soit maintenant embrayée sur l'arbre 12.

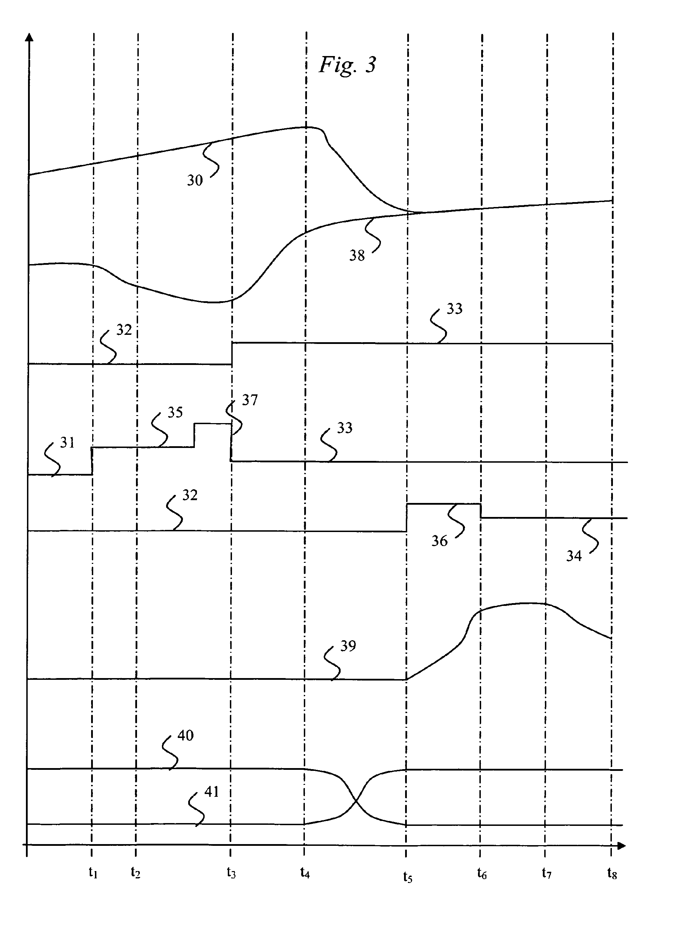

La figure 3 illustre une évolution de boîte de vitesse en fonction du temps porté en abscisse et résultant de la mise en oeuvre du dispositif de la figure 1 et du procédé de la figure 2.

Jusqu'à un instant t₄, un état haut de courbe 40 indique que c'est l'arbre primaire 12 qui est embrayé sur le moteur. C'est typiquement la séquence de transitions et d'étapes 101 à 105 qui est active. Tant que cette séquence est active, c'est-à-dire avant le croisement des embrayages que l'on observe entre les instants t₄ et t₅, le rapport en prise sur la demi-boîte de vitesses des rapports pair ne change pas. Dans l'exemple illustré, c'est le rapport de deuxième vitesse qui est en prise comme indiqué par la ligne horizontale 32.

Jusqu'à l'instant t_{4,} un état bas de courbe 41 indique que l'arbre primaire 11 est débrayé. Avant le croisement des embrayages, le rapport engagé sur la demi boîte des rapports impairs, change en fonction des conditions de fonctionnement. Un premier passage dans l'étape 102 détermine par exemple que c'est le premier rapport qui est optimal comme représenté par la ligne horizontale 31. Jusqu'à l'instant t₁, une détection de rapport 2 engagé sur la demi-boîte des rapports pairs, valide ici constamment la transition 82 qui réactive l'étape 92. Le rapport de deuxième vitesse engagé par le crabot 14, entraîne en rotation l'arbre secondaire 22 qui entraîne en conséquence le pignon 1 de première vitesse engagée par le crabot 13. Le pignon 1 constamment engrené sur l'arbre primaire 12, entraîne ce dernier en rotation. Le régime en vitesse de l'arbre primaire 12 est représenté sur la figure 3 par la partie de courbe 38 qui jusqu'à l'instant t₁, suit sensiblement l'allure de la courbe 30 du régime moteur à un coefficient multiplicatif près.

A l'instant t₁, l'étape 92 détecte que c'est le rapport de cinquième vitesse qui est optimal comme représenté par le segment horizontal 35 puis que c'est le rapport de septième vitesse qui est optimal comme représenté par le segment horizontal 37. Le coefficient de surmultiplication provoque une baisse de régime de l'arbre primaire 11 représenté par le creux de la courbe 38 malgré la croissance de la courbe 30 relative au régime moteur.

A l'instant t₃, la transition 103 signale que la volonté conducteur impose d'engager le rapport de troisième vitesse comme représenté par le segment horizontal 33. Après activation de l'étape 104, le coefficient de surmultiplication provoque une hausse de régime de l'arbre primaire 11 représenté par la remontée de la courbe 38.

A l'instant t₄, l'activation de l'étape 105 provoque un débrayage de l'arbre primaire 12 représenté par la descente de la courbe 40 et un embrayage de l'arbre primaire 11 représenté par la montée de la courbe 41 de sorte qu'à un instant t₅, un état haut de la courbe 41 est représentatif du moteur en prise sur la demi boîte des rapports impairs. L'état bas de la courbe 40 a au-delà de l'instant t₅, indique que l'arbre primaire 12 est maintenant débrayé.

L'engagement des rapports pairs peut changer librement au gré des résultats de l'étape 83 pour par exemple ici, passer du rapport de deuxième vitesse au rapport de sixième vitesse représenté par le segment horizontal 36 entre les instants t₅ et t₆, puis au rapport de quatrième vitesse représenté par le segment horizontal 34 entre les instants t₆ et t₈. Le régime de l'arbre primaire des rapports pairs, représenté par la courbe 39, suit alors ou non, le régime de l'arbre secondaire 22 selon que le rapport pair est engagé sur le même arbre secondaire ou non.

Par contre, le rapport de troisième vitesse est bloqué en prise de sorte qu'à partir de l'instant t₅, le régime de l'arbre primaire des rapports impairs, représenté par la courbe 38, suit le régime de l'arbre moteur représenté par la courbe 30.

Après engagement du rapport cible sur la demi-boîte de vitesse des rapports impairs, la demi-boîte de vitesse des rapports pairs est pilotée pour se placer sur un nouveau rapport optimal en rendement.

Le procédé et le dispositif qui viennent d'être expliquées, amènent une optimisation des points de fonctionnement qui permet de diminuer la consommation imputable à la boîte de vitesses.

## Revendications

1. Procédé pour piloter une boîte de vitesses à double embrayage comportant une demi boîte embrayée sur un rapport dit courant et une demi boîte non embrayée, comprenant une étape (105, 111) d'embrayage de la demi boîte débrayée sur un rapport cible et de débrayage de la demi boîte embrayée lorsqu'un signalement dudit rapport cible valide une transition (103, 109) de volonté conducteur, **caractérisé en ce qu'**il comprend :
- une première étape (102, 108) de présélection sur la demi-boîte non embrayée, d'un rapport optimal qui présente un rendement maximal pour la boîte de vitesse tant que ladite transition (103, 109) de volonté conducteur n'est pas validée.

2. Procédé selon la revendication 1, comprenant :
- une étape préalable (92, 94, 96, 91, 93, 95, 97, 90) de détermination du rapport optimal en fonction dudit rapport courant engagé sur la demi boîte embrayée.

3. Procédé selon la revendication 2, **caractérisé en ce que** ladite détermination du rapport optimal en fonction dudit rapport courant engagé sur la demi boîte embrayée, est basée sur des mesures effectuées préalablement sur banc d'essai.

4. Procédé selon l'une des revendications précédentes, comprenant :
- une deuxième étape (104, 110) de présélection sur la demi-boîte non embrayée, dudit rapport cible dès que ladite transition (103, 109) de volonté conducteur est pas validée.

5. Dispositif (18) pour piloter une boîte de vitesses à double embrayage **caractérisé en ce qu'**il est agencé pour exécuter le procédé selon l'une des revendications 1 à 4.

## Patentansprüche

1. Verfahren zum Steuern eines Schaltgetriebes mit Doppelkupplung, das ein auf einem Gang, aktueller Gang genannt, gekuppeltes Halbgehäuse aufweist, und ein nicht gekuppeltes Halbgehäuse, das einen Kupplungsschritt (105, 111) des ausgekuppelten Halbgehäuses auf einem Zielgang und Auskuppeln des gekuppelten Halbgehäuses aufweist, wenn eine Meldung des Zielgangs einen Übergang (103, 109) des Willens des Fahrers bestätigt, **dadurch gekennzeichnet, dass** es Folgendes aufweist:
- einen ersten Schritt (102, 108) der Vorauswahl auf dem nicht gekuppelten Halbgehäuse eines optimalen Gangs, der eine maximale Leistung für das Schaltgetriebe aufweist, solange der Übergang (103, 109) des Willens des Fahrers nicht bestätigt ist.

2. Verfahren nach Anspruch 1, das Folgendes aufweist:
- einen vorausgehenden Schritt (92, 94, 96, 91, 93, 95, 97, 90) des Bestimmens des optimalen Gangs in Abhängigkeit von dem aktuellen Gang, der auf dem gekuppelten Halbgehäuse eingerückt ist.

3. Verfahren nach Anspruch 2, **dadurch gekennzeichnet, dass** die Bestimmung des optimalen Gangs in Abhängigkeit von dem aktuellen Gang, der auf dem gekuppelten Halbgehäuse eingerückt ist, auf Messungen basiert, die zuvor auf einem Prüfstand ausgeführt wurden.

4. Verfahren nach einem der vorhergehenden Ansprüche, das Folgendes aufweist:
- einen zweiten Schritt (104, 110) der Vorauswahl auf dem nicht gekuppelten Halbgehäuse des Zielgangs, sobald der Übergang (103, 109) des Willens des Fahrers nicht bestätigt ist.

5. Vorrichtung (18) zum Steuern eines Schaltgetriebes mit Doppelkupplung, **dadurch gekennzeichnet, dass** sie zum Ausführen des Verfahrens nach einem der Ansprüche 1 bis 4 eingerichtet ist.

## Claims

1. A method for controlling a double clutch gearbox comprising a half-box engaged at a so-called routine ratio, and an unengaged half-box, including a step (105, 111) of engaging the disengaged half-box at a target ratio and disengaging the engaged half-box when a signalling of the said target ratio confirms a transition (103, 109) desired by the driver, **characterized in that** it includes:
- a first step (102, 108) of preselecting, on the unengaged half-box, an optimum ratio that has a maximum gearbox efficiency as long as the said transition (103, 109) desired by the driver is not confirmed.

2. The method according to Claim 1, including:
- a prior step (92, 94, 96, 91, 93, 95, 97, 90) of determining the optimum ratio as a function of the said routine ratio engaged on the engaged half-box.

3. The method according to Claim 2, **characterized in that** the said determining of the optimum ratio as a function of the said routine ratio engaged on the engaged half-box is based on measures carried out previously on the test bench.

4. The method according to one of the preceding claims, including:
- a second step (104, 110) of preselecting, on the unengaged half-box, of the said target ratio as soon as the said transition (103, 109) desired by the driver is not confirmed.

5. A device (18) for controlling a double clutch gearbox, **characterized in that** it is arranged to carry out the method according to one of Claims 1 to 4.
